# EUROPEAN PATENT SPECIFICATION

(11) **EP 0 705 304 B1**
(45) Date of publication and mention of the grant of the patent: **12.05.1999**
(21) Application number: 93918107.9
(22) Date of filing: 12.08.1993
(51) Int. Cl.: C08L 67/00, C08L 63/00, C08K 3/00

(54) **PROCESS FOR PREPARING CERAMIC-LIKE MATERIALS AND THE CERAMIC-LIKE MATERIALS**
KERAMIKARTIGES MATERIAL UND VERFAHREN ZU SEINER HERSTELLUNG
PROCEDE DE PREPARATION DE MATERIAUX DE TYPE CERAMIQUE, ET MATERIAUX DE TYPE CERAMIQUE OBTENUS

(30) Priority: 25.06.1993 PL 29947393
(43) Date of publication of application: 10.04.1996
(73) Proprietor: Cyrkiewicz, Marceli, PL-90-146 Lodz (PL); Herling, Erwin, New York, NY 10021 (US); Kleszczewski, Jacek, PL-94-115 Lodz (PL)
(72) Inventor: Cyrkiewicz, Marceli, PL-90-146 Lodz (PL); Herling, Erwin, New York, NY 10021 (US); Kleszczewski, Jacek, PL-94-115 Lodz (PL)
(74) Representative: Grünecker, Kinkeldey, Stockmair & Schwanhäusser Anwaltssozietät
(86) International application number: PL9300013
(87) International publication number: WO9500589

(56) References cited:
- GB-A- 1 541 655
- PL-A- 283 240
- US-A- 3 873 492
- CHEMICAL ABSTRACTS, vol. 110, no. 11, 29 May 1989, Columbus, Ohio, US; abstract no. 198189z, W.F.CHANG 'STABILIZATION OF PHOPHOGYPSUM WITH EPOXY' page 344 ; & PROCEEDINGS OF THE INTERNATIONAL CONFERENCE ON PHOPHOGYPSUM no. 2 , 1988 , CHINA pages 287 - 300 XP57029
- CHEMICAL ABSTRACTS, vol. 101, no. 12, 17 September 1984, Columbus, Ohio, US; abstract no. 96679f, 'FOAMED GYPSUM BOARDS' page 345 ; & JP,A,5 954 658 (AIN ENGINEERING KK)
- DATABASE WPI Week 8716, Derwent Publications Ltd., London, GB; AN 87-112152 & JP,A,62 057 456 (SHOWA) 7 September 1985 & PATENT ABSTRACTS OF JAPAN vol. 11, no. 251 (C-440)14 August 1987 & JP,A,62 057 456 (SHOWA) 13 March 1987

## Description

The present invention is concemed with a process for preparing a material having ceramic-like properties, by binding an inorganic filler with a synthetic resin in a non-aqueous system. The so-produced material has various properties useful in many branches of industry, and at the same time making it possible to utilise industrial waste products.

The Proceedings of the Second International Symposium on Phosphogypsum, Volume 2, pages 287 to 300, disclose a general article on the stabilisation of phosphogypsum with epoxy. In particular, an epoxy-stabilised phosphogypsum is disclosed comprising phosphogypsum and epoxy consisting of epoxy resin and a curing agent. Furthermore, it is described that specimens were fabricated out of this material under different consolidation pressures and were air-dried under laboratory conditions.

It is known from several patents, including Polish patent specifications 113 573 and 147 599, that the waste phosphogypsum, obtained in the wet process of producing phosphoric acid, can be used as a raw material to manufacture flooring compositions, stuccoes or building binders, after being treated with carbamine or melamine resin. The drawback of these processes is that, besides toxicity of these resins, they require a long time to be polymerised or cured and the resultant material is rather brittle and hygroscopic due to its porous structure. Polish patent application no. P. 283 240 relates to a process for manufacturing a ceramic composition by binding phosphogypsum in a non-aqueous system with polyester resins including an accelerant, a curing agent and acetone, if required. The resultant material is suitable for producing various articles with good mechanical strength and low water and oil absorbabilities by extrusion or casting.

It has unexpectedly tumed out that the use of phosphogypsum, being a by-product in the production of phosphoric acid, as an inorganic filler, preferably an apatite derived phosphogypsum, by itself or, if required, in a composition with other compounds, bonded with epoxy resins or their mixtures with polyester resins in a non-aqueous system, makes it possible to prepare water resistant materials having ceramic-like properties suitable for a wide application, showing properties similar to those of metals, and at the same time being readily processable, particularly by casting, and then, if required, additionally by mechanical working.

The invention relates to a process for preparing a material having ceramic-like properties, by binding an inorganic filler with a synthetic resin in a non-aqueous system, characterised in that the process consists of the following steps:

heating the inorganic filler in the form of waste phosphogypsum for at least one hour at a temperature of at least 167° C, adding to 100 volume parts of epoxy resin or a mixture of epoxy resin with 20 - 80 volume % polyester resins, 45 - 200 volume parts of preheated inorganic filler with a grain size of up to 20 µm on continuous stirring for 0.2 -5 hours, and adding 8 - 20 volume parts of a curing agent to the resulting mixture for curing the mixture, casting the resulting mixture into a mould, curing the mixture in the mould, and demoulding the article.

According to a preferred embodiment of the present invention, the used waste phosphogypsum is derived from apatite.

Furthermore, to the composition prior to curing, up to 12 parts by volume of an inorganic dilutant such as acetone or styrene can be added to maintain the raw composition viscosity at a level not higher than 4150 mPa•s.

Furthermore, according to a further preferred embodiment of the present invention, the added curing agent consists of 8 - 20 volume parts of triethylenetetraamine or its mixture with a solution of 20 - 40 volume % benzoylperoxide or cyclohexanone peroxide in dibutylphtalate containing 2 - 16 volume parts of triethylenetraamine and 0.5 - 8.5 volume parts of the peroxide solution.

The raw composition can be coloured as required with any pigment.

Using the process in accordance with the present invention, beside the above-mentioned materials having ceramic-like properties, one can also prepare materials having ceramic-like properties with specific properties, by using, as an inorganic filler, a dry composition previously homogenised physically, containing phosphogypsum and magnetite in the volume ratio 1 : 0.72 - 1.42 or phosphogypsum and glass-forming oxides in the volume ratio 1 : 0.83 - 1.39, while the glass-forming oxides consist mainly of lead oxide in an amount of 81% by weight, silicone dioxide in an amount of 11.5% by weight and barium oxide in an amount of 2.6% by weight. The grain size of the dry composition containing phophogypsum and magnetite is preferably 18 µm at most and that of the dry composition containing phosphogypsum and glass-forming oxide preferably up to 16 µm.

Furthermore, the process in accordance with this invention makes it possible to prepare expandable materials having ceramic-like properties with completely closed pores, by adding after the addition of the curing agent, an expanding agent during a period of at least 10 minutes, preferably butyl isocyanate and water in amounts of up to 30% by volume and 0.06 - 0.15% by volume respectively, in relation to the whole composition.

The material having ceramic-like properties produced according to the inventive process and containing phosphogypsum and magnetite in the volume ratio 1 : 0.72 - 1.42 is a material having magnetic properties.

Furthermore, the material having ceramic-like properties produced according to the present invention and containing an inorganic filler consisting of phosphogypsum and glass-forming oxide is characterised in that the so produced material is effective at absorbing an X-radiation of 45 - 55 keV and a hard radiation of 0.6 - 1.25 MeV.

The materials having ceramic-like properties in accordance with the present invention, depending on their composition, can be used in a wide range of application. Various articles can be made from them by casting. Moreover, the materials having ceramic-like properties, according to the present invention, show perfect adhesion to metal, wood, concrete, glass and most plastics. Therefore, they can be optionally joined with other materials either directly at the polymerisation stage or after curing by means of a prepolymerised composition.

At the same time the process according to the present invention makes it possible to utilise excessive quantities of the waste phosphogypsum obtained during the production of phosphoric acid by the wet process. This waste stored at vast dumping grounds, brings about a growing degradation of the natural environment. Thus, the waste when utilised by the process in accordance with this invention, due to very good mechanical properties of the resultant materials having ceramic-like properties, as well as their good resistance to extemal conditions, such as moisture, corrosion, acids and alkalies, on the one hand will partly assist in reducing the environmental hazard, while on the other hand, they will make it possible in many cases to decrease the consumption of metals, calcareous ore output and gravel.

The invention is further described by the following examples without limiting the scope of its application.

### Example I

To 2 dm³ of epoxy resin, 2.8 dm³ of an apatite derived phosphogypsum, previously heated at a temperature of 235 - 239° C for 2.1 hours, with a grain size of 14 - 17 µm are added for 2.1 hours on continuous stirring along with 0.05 dm³ of styrene, after which the whole is stirred for 30 minutes to obtain a composition with a viscosity of 3200 mPa·s. Then, 3 g of pigment blue B and 0.125 dm³ of triethylenetetraamine are added. The resultant composition is casted into an appropriate mould to obtain, after 0.9 hours, a dish to be used as a satellite antenna.

### Example II

To a composition containing 0.5 volume parts of epoxy resin and 0.3 volume parts of an unpolyester resin modified with maleic anhydride, a previously homogenised dry mix with a grain size of up to 10 µm, consisting of 0.4 volume parts of phosphogypsum prepared as in example I and 0.5 volume parts of magnetite is added on continuous stirring for 1 hours. Then 0.001 volume parts of cobalt naphthenate, 0.13 volume parts of acetone, 0.065 volume parts of triethylenetetraamine and 0.012 volume parts of a 27% solution of benzoyl peroxide in dibutyl phthalate are added, the whole compositions thoroughly stirred and casted into prepared moulds to form fumiture magnetic lock inserts.

### Example III

To a composition containing 2 volume parts of epoxy resin and 2.2 volume parts of a saturated polyester resin, on continuous stirring for 2.7 hours 4.8 volume parts of a homogenised dry composition with a grain size up to 8 µm, containing 45% by volume of a waste apatite derived phosphogypsum previously heated for 3.5 hours at a temperature of 247° C and 55% by volume of lead cullet, along with 0.05 volume parts of acetone are added and stirred for a further 0.5 hours. Then, to the raw composition 0.47 volume parts triethylenetetraamine is added and the whole is casted to prepared moulds to form portable protective screens, useful at work with radioactive substances.

### Example IV

Proceeding as in example I, after the addition of triethylenetetraamine to the raw composition 0.97 dm³ of butyl isocyanate and 0.25 dm³ of water are added and the whole is casted into prepared moulds to form, after polymerisation, extemal insulating wall boards.

## Claims

1. A process for preparing a material having ceramic-like properties, by binding an inorganic filler with a synthetic resin in a non-aqueous system,
**characterised in that** the process consists of the following steps:
- heating the inorganic filler in the form of waste phosphogypsum for at least one hour at a temperature of at least 167°C,
- adding to 100 volume parts of epoxy resin or a mixture of epoxy resin with 20 - 80 volume % polyester resins, 45 - 200 volume parts of the preheated inorganic filler with a grain size of up to 20 pm on continuous stirring for 0.2 - 5 hours, and
- adding 8 - 20 volume parts of a curing agent to the resulting mixture for curing the mixture,
- casting the resulting mixture into a mould,
- curing the mixture in the mould, and
- demoulding the article.

2. A process according to claim 1, **characterised in that** the waste phosphogypsum used is derived from apatite.

3. A process according to claim 1 or 2, **characterised in that** to the composition prior to curing, up to 12 parts by volume of an organic diluent such as acetone or styrene are added.

4. A process according to one of claims 1 to 3, **characterised in that** the added curing agent consists of 8 - 20 volume parts of triethylenetetraamine or its mixture with a solution of 20 - 40 volume % benzoylperoxide or cyclohexanone peroxide in dibutylphtalate containing 2 - 16 volume parts of triethylenetetraamine and 0.5 - 8.5 volume parts of the peroxide solution.

5. A process according to one of claims 1 to 4, wherein the inorganic filler consists of a previously physically homogenized dry composition with a grain size of up to 18 µm, containing phosphogypsum and magnetite in a volume ratio of 1 : 0.72 - 1 : 1.42.

6. A process according to one of claims 1 to 4, wherein the inorganic filler consists of a previously physically homogenized dry composition with a grain size of up to 16 µm, containing in a volume ratio of 1 : 0.83-1 : 1.39 phosphogypsum and glass-forming oxides, said oxides consisting mainly of lead oxide in an amount of 81 % by weight, silicon dioxide in an amount of 11.5 % by weight and barium oxide in an amount of 2.6 % by weight.

7. A process according to one of claims 1 to 4, wherein after the addition of the curing agent, an expanding agent is added during a period of at least 10 minutes, preferably butyl isocyanate and water in amounts of up to 30% by volume and 0.06 - 0.15 % by volume respectively, in relation to the whole composition.

8. A process according to claim 1, wherein the material is prepared from 2.8 volume parts of an apatite derived phosphogypsum, 2 volume parts epoxy resin, 0.05 volume parts styrene, 1,5 g of pigment blue B per 1 l of epoxy resin and 0.125 volume parts triethylenetetraamine and the mould has the form of a satellite antenna.

9. A process according to claim 1, wherein the material is prepared from 0.4 volume parts of a phosphogypsum, 0,5 volume parts of epoxy resin, 0.3 volume parts of a polyester resin modified with maleic anhydride, 0.5 volume parts magnetite, 0.001 volume parts cobalt naphthenate, 0.13 volume parts acetone, 0.065 volume parts triethylenetetraamine and 0.012 volume parts of a 27% solution of benzoyl peroxide in dibutyl phthalate and the mould has the form of fumiture magnetic lock inserts.

10. A process according to claim 1, wherein the material is prepared from 2 volume parts epoxy resin, 2.2 volume parts of a saturated polyester resin, 4.8 volume parts of a homogenised dry composition, containing 45 volume % of a waste phosphogypsum derived from apatite and 55 volume % of lead cullet, 0.05 volume parts acetone and 0.47 volume parts triethylenetetraamine and the mould has the form of portable protective screens.

11. A process according to claim 1, wherein the material is prepared from 2.8 volume parts of an apatite derived phosphogypsum, 2 volume parts epoxy resin, 0.05 volume parts styrene, 1,5 g of pigment blue B per 1 l of epoxy resin, 0.125 volume parts triethylenetetraamine, 0.97 volume parts butyl isocyanate and 0.25 volume parts water and the mould has the form of external insulation wall boards.

12. A moulding material consisting of 100 volume parts of an inorganic filler being a dry composition consisting of phosphogypsum and glass-forming oxides, 50 - 225 volume parts of epoxy resin or a blend of 10 - 80 volume parts of epoxy resin and 10 - 180 volume parts of saturated polyester resin, up to 12 volume parts of acetone or styrene and 8 - 20 volume parts of triethylenetetraamine, wherein the ratio in volume parts between the phosphogypsum and the glass-forming oxides in the material is 1 : 0,83-1:1,39 and the glass-forming oxides consist mainly of lead oxide in an amount of 81% by weight, silicon dioxide in an amount of 11.5% by weight, and barium oxide in an amount of 2.6% by weight.

13. A moulding material consisting of 100 volume parts of an inorganic filler being a dry composition consisting of phosphogypsum and glass-forming oxides, 50 - 225 volume parts of epoxy resin or a blend of 10 -180 volume parts of epoxy resin and 10 - 180 volume parts of an unsaturated polyester resin, up to 12 volume parts of acetone or styrene, 0.06 to 0.55 volume parts of cobalt naphthenate as an accelerant and 8 - 20 volume parts of triethylenetetraamine, wherein the ratio in volume parts between the phosphogypsum and the glass-forming oxides in the material is 1: 0.83 - 1:1,39 and the glass-forming oxides consist mainly of lead oxide in an amount of 81% by weight, silicon dioxide in an amount of 11,5% by weight and barium oxide in an amount of 2.6% by weight.

## Patentansprüche

1. Verfahren zur Herstellung eines Materials mit Eigenschaften, welche einer Keramik ähnlich sind, indem ein anorganisches Füllmaterial mit einem synthetischen Harz in einem nichtwässrigen System gebunden wird, dadurch gekennzeichnet, daß das Verfahren aus den folgenden Schritten besteht:
- Erwärmen des anorganischen Füllmaterials in der Form von Abfallphosphogyps für wenigstens 1 Stunde bei einer Temparatur von wenigstens 167° Celsius,
- Hinzufügen zu 100 Volumenteilen Epoxyharz oder einer Mischung aus Epoxyharz mit 20 bis 80 Volumenprozent Polyesterharz, 45 bis 2100 Volumenteile eines vorgewärmten anorganischen Füllstoffes mit einer Korngröße bis zu 20 um unter kontinuierlichem Rühren, 0,2 bis 5,0 Stunden und
- Hinzufügen von 8 bis 20 Volumenteilen eines Härters zu der resultiertenden Mischung um die Mischung auszuhärten,
- Gießen der resultierenden Mischung in eine Form,
- Härten der Mischung in der Form und
- Ausformen des Erzeugnisses.

2. Verfahren nach Anspruch 1, dadurch gekennzeichnet, daß der verwendete Abfallphosphogyps aus Apatit abgeleitet wird.

3. Verfahren nach Anspruch 1 oder 2, dadurch gekennzeichnet, daß zu der Zusammensetzung vor dem Härten bis zu 12 Volumenteile eines organischen Verflüssigers wie Aceton oder Styrol hinzugefügt wird.

4. Verfahren nach einem der Ansprüche 1 bis 3, dadurch gekennzeichnet, daß der zugegebene Härter aus 8 - 20 Volumenteilen Triethylentetramin oder dessen Mischung mit einer Lösung von 20 - 40 Volumenprozent Benzoylperoxid oder Cyclohexanonperoxid in Dibutylphthalate, enthaltend 2 bis 16 Volumenteile Triethylentetramin und 0,5 bis 8,5 Volumenteile Peroxidlösung besteht.

5. Verfahren nach einem der Ansprüche 1 bis 4, wobei der anorganische Füllstoff aus einer vorher physikalisch homogenisierten trockenen Zusammensetzung mit einer Korngröße bis zu 18 µmm besteht, enthaltend Phospogyps und Magnetit in einem Volumenverhältnis von 1 : 0,72 bis 1 : 1,42.

6. Verfahren nach einem der Ansprüche 1 bis 4, wobei der anorganische Füllstoff aus einer zuvor physikalisch homogenisierten trokkenen Mischung mit einer Korngröße von bis zu 16 µmm, enthaltend in einem Volumenverhältnis von 1 : 0,83 bis 1 : 1,39 Phosphogyps und glasbildende Oxide, wobei die Oxide hauptsächlich aus Bleioxid in einer Menge von 81 Gew.-%, Siliciumdioxid in einer Menge von 11,5 Gew.-% und Bariumoxid in einer Menge von 2,6 Gew.-% besteht.

7. Verfahren nach einem der Ansprüche 1 bis 4, wobei nach der Zugabe des Härters ein Schäumungsmittel über einen Zeitraum von wenigstens 10 Minuten zugegeben wird, vorzugsweise Butylisocyanat und Wasser in Mengen von bis zu 30 Volumenprozent und 0,06 bis 0,15 in Bezug auf die Gesamtmischung.

8. Verfahren nach Anspruch 1, wobei das Material aus 2,8 Volumenteilen eines aus Apatit abgeleiteten Phosphogyps, 2 Volumenteile Epoxyharz, 0,05 Volumenteile Styrol, 1,5 g Blaupigment B pro 1 Liter Epoxyharz und 0,125 Volumenteilen Triethylentetramin hergestellt wird und die Form einer Satellitenschüssel aufweist.

9. Verfahren nach Anspruch 1, wobei das Material aus 0,4 Volumenteilen Phosphogyps, 0,5 Volumenteilen Epoxyharz, 0,3 Volumenteilen eines mit Maleinanhydrid modifizierten Polyesterharzes, 0,5 Volumenteile Magnetide, 0,001 Volumenteile, Kobaltnaphthenate, 13 Volumenteile Aceton, 0,065 Volumenteile Triethylentetramin und 0,012 Volumenteile einer 27%igen Lösung aus Benzoylperoxid in Dibutylphtalat hergestellt wird und die Form von Magnetschlüsseleinsetzen für Möbel aufweist.

10. Verfahren nach Anspruch 1, wobei das Material aus 2 Volumenteilen Epoxyharz, 2,2 Volumenteilen eines gesättigten Polyesterharzes, 4,8 Volumenteilen einer homogenisierten trockenen Mischung enthalten 45 Volumenprozent eines aus Apatit abgeleiteten Abfallphosphogypses und 55 Volumenprozent Bleiabfall, 0,05 Volumenteile Aceton und 0,47 Volumenteile Triethylentetramin hergestellt wird und die Form von tragbaren Schutzscheiben aufweist.

11. Verfahren nach Anspruch 1, wobei das Material aus 2,8 Volumenteilen aus Apatit abgeleiteten Phospogyps, 2 Volumenteile Epoxyharz, 0,05 Volumenteilen Styrol, 1,5 g Blaupigment B pro 1 Liter Epoxyharz, 0,125 Volumenteile Triethylentetramin, 0,97 Volumenteile Butylisocyanat und 0,25 Volumenteile Wasser hergestellt wird und die Form von äußeren Isolationswandplatten aufweist.

12. Formmaterial bestehend aus 100 Volumenteilen eines anorganischen Füllstoffes, welcher eine Trockene Zusammensetzung, bestehend aus Phosphogyps und glasbildenden Oxyden ist, 50 bis 225 Volumenteilen Epoxharz oder einer Mischung aus 10 - 100 Volumenteilen Epoxyharz und 10 - 180 Volumenteilen gesättigtem Polyesterharzes bis zu 12 Volumenteilen Aceton oder Styrol und 8 - 20 Volumenteilen Triethylentetramin, wobei das Verhältnis zwischen dem Phosphopgyps und den glasbildenden Oxyden in dem Material in Volumenteilen wie folgt ist: 1 : 0,83 bis 1 : 1,39 und die glasbildenden Oxide hauptsächlich aus Bleioxid in einer Menge von 81 Gew.-%, Siliciumdioxid in einer Menge von 11,5 Gew.-% und Bariumoxid in einer Menge von 2,6 Gew.-% bestehen.

13. Formmaterial, bestehend aus 100 Vol.-Teilen eines anorganischen Füllstoffes, welcher aus einer trockenen Zusammensetzung aus Phosphogips und glasbildenden Oxiden besteht, 50 - 225 Vol.-Teile Epoxyharz oder einer Mischung von 10 - 180 Vol.-Teile Epoxyharz und 10 - 180 Vol.-Teile eines gesättigten Polyesterharzes, bis zu 12 Vol.-Teile Aceton oder Styrol, 0,06 bis 0,55 Vol.-Teile Kobaltnaphthenat als ein Beschleuniger und 8 - 20 Vol.-Teile Triethylentetraamin, wobei das Verhältnis in Vol.-Teilen zwischen Phosphogips und glasbildenden Oxidenwie folgt ist: 1 : 0,83 - 1 : 1,39 und die glasbildenden Oxide hauptsächlich aus Bleioxid in einer Menge von 81 Gew.-%, Siliciumdioxid in einer Menge von 11,5 Gew.-% und Bariumoxid in einer Menge von 2,6 Gew.-% bestehen.

## Revendications

1. Procédé de préparation d'un matériau ayant des propriétés semblables à celles des céramiques, en liant une matière de remplissage inorganique avec une résine synthétique dans un système non aqueux, caractérisé en ce que le procédé comprend les étapes suivantes :
- chauffer la matière de remplissage inorganique sous forme de phosphogypse résiduel pendant au moins une heure à une température d'au moins 167°C,
- ajouter à 100 parties en volume de résine époxy ou d'un mélange de résine époxy avec 20 à 80% en volume de résines de polyester, 45 à 200 parties en volume de la matière de remplissage inorganique préchauffée ayant une granulométrie pouvant atteindre 20 µm sous agitation continue pendant 0,2 à 5 heures, et
- ajouter 8 à 20 parties en volume d'un agent de cuisson au mélange obtenu pour cuire le mélange,
- couler le mélange obtenu dans un moule,
- cuire le mélange dans le moule, et
- démouler l'article.

2. Procédé selon la revendication 1, caractérisé en ce que le phosphogypse résiduel utilisé est dérivé de l'apatite.

3. Procédé selon la revendication 1 ou 2, caractérisé en ce qu'on ajoute à la composition, avant cuisson, jusqu'à 12 parties en volume d'un diluant organique comme l'acétone ou le styrène.

4. Procédé selon l'une des revendications 1 à 3, caractérisé en ce que l'agent de cuisson ajouté est composé de 8 à 20 parties en volume de triéthylènetetraamine, ou bien d'un mélange de celle-ci avec une solution de 20 à 40 % en volume de peroxyde de benzoyl ou de peroxyde de cyclohexanone dans du dibutylphtalate contenant 2 à 16 parties en volume de triéthylènetetraamine et 0,5 à 8,5 parties en volume de la solution de peroxyde.

5. Procédé selon l'une des revendications 1 à 4, dans lequel la matière de remplissage inorganique est composée d'une composition sèche, physiquement homogénéisée au préalable, ayant une granulométrie pouvant atteindre 18 µm, contenant du phosphogypse et de la magnétite selon un rapport de volume de 1/0,72 à 1/1,42.

6. Procédé selon l'une des revendications 1 à 4, dans lequel la matière de remplissage inorganique est composée d'une composition sèche, physiquement homogénéisée au préalable, ayant une granulométrie pouvant atteindre 16 µm, contenant, selon un rapport de volume de 1/0,83 à 1/1,39, du phosphogypse et des oxydes de vitrification, lesdits oxydes étant principalement composés d'oxyde de plomb en une quantité égale à 81% en poids, de dioxyde de silicium en une quantité égale à 11,5% en poids et d'oxyde de baryum en une quantité égale à 2,6% en poids.

7. Procédé selon l'une des revendications 1 à 4, dans lequel après l'ajout de l'agent de cuisson, un agent de dilatation est ajouté au cours d'une période d'au moins 10 minutes, de préférence du butylisocyanate et de l'eau en une quantité pouvant atteindre 30% en volume et 0,06 à 0,15% en volume, respectivement, par rapport à la totalité de la composition.

8. Procédé selon la revendication 1, dans lequel le matériau est préparé à partir de 2,8 parties en volume d'un phosphogypse dérivé de l'apatite, 2 parties en volume de résine époxy, 0,05 partie en volume de styrène, 1,5 g de pigment bleu B par litre de résine époxy et 0,125 partie en volume de triéthylènetetraamine et le moule présente la forme d'une antenne de satellite.

9. Procédé selon la revendication 1, dans lequel le matériau est préparé à partir de 0,4 partie en volume de phosphogypse, 0,5 partie en volume de résine époxy, 0,3 partie en volume d'une résine de polyester modifiée avec de l'anhydride maléique, 0,5 partie en volume de magnétite, 0,001 partie en volume de naphténate de cobalt, 0,13 partie en volume d'acétone, 0,065 partie en volume de triéthylènetetraamine et 0,012 partie en volume d'une solution à 27% de benzoylperoxyde dans du dibutylphtalate et le moule présente la forme d'inserts pour fermeture magnétique de meubles.

10. Procédé selon la revendication 1, dans lequel le matériau est préparé à partir de 2 parties en volume de résine époxy, 2,2 parties en volume d'une résine de polyester saturé, 4,8 parties en volume d'une composition sèche homogénéisée; contenant 45% en volume d'un phosphogypse résiduel dérivé de l'apatite et 55% en volume de groisil de plomb, 0,05 parties en volume d'acétone et 0,47 partie en volume de triéthylènetetraamine, et le moule présente la forme d'écrans de protection portables.

11. Procédé selon la revendication 1, dans lequel le matériau est préparé à partir de 2,8 parties en volume d'un phosphogypse dérivé de l'apatite, 2 parties en volume de résine époxy, 0,05 partie en volume de styrène, 1,5 g de pigment bleu B par litre de résine époxy, 0,125 partie en volume de triéthylènetetraamine, 0,97 partie en volume d'isocyanate de butyle et 0,25 partie en volume d'eau, et le moule présente la forme de panneaux de mur isolants extérieurs.

12. Matériau de moulage composé de 100 parties en volume d'une matière de remplissage inorganique qui est une composition sèche composée de phosphogypse et d'oxydes de vitrification, 50 à 225 parties en volume de résine époxy ou un mélange composé de 10 à 180 parties en volume de résine époxy et de 10 à 180 parties en volume de résine de polyester saturée, jusqu'à 12 parties en volume d'acétone ou de styrène et 8 à 20 parties en volume de triéthylènetetraamine, dans lequel le rapport en parties en volume entre le phosphogypse et les oxydes de vitrification dans le matériau est égal à 1/0,83 à 1/1,39 et les oxydes de vitrification sont principalement composés d'oxyde de plomb en une quantité égale à 81% en poids, de dioxyde de silicium en une quantité égale à 11,5% en poids, et d'oxyde de baryum en une quantité égale à 2,6% en poids.

13. Matériau de moulage composé de 100 parties en volume d'une matière de remplissage inorganique qui est une composition sèche composée de phosphogypse et d'oxydes de vitrification, 50 à 225 parties en volume de résine époxy ou un mélange composé de 10 à 180 parties en volume de résine époxy et de 10 à 180 parties en volume de résine de polyester saturée, jusqu'à 12 parties en volume d'acétone ou de styrène, 0,06 à 0,55 parties en volume de naphténate de cobalt comme agent d'accélération et 8 à 20 parties en volume de triéthylènetétraamine, dans lequel le rapport en parties en volume entre le phosphogypse et les oxydes de vitrification dans le matériau est de 1:0,83 à 1:1,39, et les oxydes de vitrification sont principalement composés d'oxyde de plomb en une quantité égale à 81 % en poids, de dioxyde de silicium en une quantité de 11,5 % en poids et d'oxyde de baryum en une quantité de 2,6 % en poids.
